(19) Europäisches Patentamt
European Patent Office
Office européen des brevets

(11) Numéro de publication: **0 033 265**
**B1**

# (12) FASCICULE DE BREVET EUROPEEN

(45) Date de publication du fascicule du brevet: **09.02.83**

(51) Int. Cl.³: **A 01 N 43/84** // (A01N43/84, 39/02)

(21) Numéro de dépôt: **81400069.1**

(22) Date de dépôt: **20.01.81**

(54) **Compositions herbicides à base de diamino-2,4 chloro-6 méthylthio-5 pyrimidine et de diclofop méthyl et procédé de traitement des cultures à l'aide desdites compositions.**

(30) Priorité: **29.01.80 FR 8001851**

(43) Date de publication de la demande: **05.08.81 Bulletin 81/31**

(45) Mention de la délivrance du brevet: **09.02.83 Bulletin 83/6**

(84) Etats contractants désignés: **BE DE FR GB IT LU NL**

(56) Documents cités:
**FR-A-2 184 906**
**FR-A-2 417 507**

(73) Titulaire: **P C U K PRODUITS CHIMIQUES UGINE KUHLMANN, Service Propriété Industrielle Tour Manhattan, F-92087 Paris La Defense 2 Cédex 21 (FR)**

(72) Inventeur: **Begon, Jean, 25, rue de la Paix Bâtiment B, F-94300 Vincennes (FR)**
Inventeur: **Boutemy, Gérard Emile Marcel, 19 Chemin des Résistants Oncy Sur Ecole, F-91490 Milly La Foret (FR)**

**EP 0 033 265 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Compositions herbicides à base de diamino-2,4 chloro-6 méthylthio-5 pyrimidine et de diclofop méthyl et procédé de traitement des cultures à l'aide desdites compositions

La présente invention a pour objet des compositions herbicides contenant, en tant que matières actives, de la diamino-2,4 chloro-6 méthylthio-5 pyrimidine (composé dénommé A par la suite) ou un mélange des deux composés isomères diamino-2,4 chloro-6 méthylthio-5 pyrimidine (composé A) et diamino-4,6 chloro-2 méthylthio-5 pyrimidine (composé B) dans lequel le composé A est prépondérant, et du diclofop méthyl. Le diclofop méthyl est l'ester méthylique de l'acide α-[(dichloro-2',4' phénoxy)-4 phénoxy] propionique, c'est-à-dire le composé de formule:

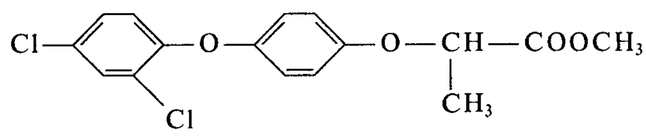

L'invention concerne également un procédé de traitement des cultures de céréales à l'aide desdites compositions.

Par mélange des deux composés A et B dans lequel le composé A est prépondérant on entend tout mélange des deux composés A et B dans lequel le pourcentage en poids de A est supérieur à 50%, de préférence supérieur ou égal à 80%.

Le composé A, les mélanges des deux composés A et B et le diclofop méthyl sont des herbicides connus. Le composé A a par exemple été décrit, en tant qu'herbicide, dans la demande de brevet au Japon n° 6 335/77 publiée le 15 AoOt 1978 sous le numéro 92 789/78 et dans la demande de brevet européen n° 78 400 062.2 publiée le 7 Février 1979 sous le n° 0 000 681 Toutefois il n'a pas été proposé jusqu'ici d'associer le composé A au diclofop méthyl.

Dans les compositions herbicides selon l'invention le rapport en poids

$$\frac{\text{composé A}}{\text{diclofop méthyl}}$$

ou

$$\frac{\text{mélange des deux composés A et B}}{\text{diclofop méthyl}}$$

va de $1/5$ à 5, de préférence de $1/2$ à 2.

Outre les matières actives précédemment citées, les compositions selon l'invention peuvent contenir les additifs inertes (diluants solides ou liquides, dispersants, adjuvants, tensioactifs, agents mouillants, etc.) habituellement utilisés en agriculture pour diluer les matières actives et faciliter leur mise en suspension aqueuse. De tels additifs inertes sont bien connus de l'homme de l'art. Comme tels on peut citer des diluants solides (talc, silice, kieselguhr, craie, terre de diatomées, argile, etc.), des diluants liquides (eau, huiles minérales, solvants organiques), des tensio-actifs anioniques ou non ioniques, etc. Les compositions selon l'invention peuvent se présenter en particulier sous forme de poudres mouillables, de poudres pour poudrage, de suspensions aqueuses, de solutions dans des solvants organiques, de granulés solides.

Pour préparer les compositions selon l'invention, on mélange intimement les divers constituants, c'est-à-dire le composé A (ou le mélange des deux composés isomères A et B), le diclofop méthyl et éventuellement les additifs inertes, les deux matières actives étant introduites dans les proportions indiquées précédemment.

Les compositions selon l'invention présentent un effet de synergie, c'est-à-dire que leur efficacité herbicide est nettement supérieure à celle que l'on pourrait attendre à partir des résultats obtenus avec le composé A (ou le mélange des composés A et B) seul et avec le diclofop méthyl seul. Un tel effet est inattendu.

Les compositions selon l'invention conviennent pour le désherbage des céréales, en particulier du blé et de l'orge. Pour le traitement des céréales les compositions selon l'invention sont formulées sous forme de bouillies aqueuses stables. Ces bouillies sont appliquées par pulvérisation, de préférence en post-levée de la plante cultivée. La dose totale de matières actives appliquée est de 600 à 3500 g/ha.

Les exemples suivants illustrent l'invention sans la limiter.

## Exemple I

### Traitement herbicide du blé (application de post-levée)

Les matières actives employées sont soit le diclofop méthyl seul, soit un mélange des deux composés A et B contenant 89% en poids de composé A et 11% en poids de composé B (mélange dénommé M par la suite), soit des mélanges des deux matières actives précédentes dans le rapport pondéral:

$$\frac{\text{Mélange M}}{\text{diclofop méthyl}} = \frac{6}{10}$$

ou

$$\frac{\text{Mélange M}}{\text{diclofop méthyl}} = \frac{12}{10}$$

Le diclofop méthyl est formulé sous forme de la solution en milieu solvant organique, à 360 g par litre de matière active, connue sous la marque de commerce »Illoxan«.

Le mélange M est formulé sous forme d'une poudre mouillable ayant la composition suivante (les pourcentages sont en poids):

| | |
|---|---|
| — mélange M | 80% |
| — talc | 10% |
| — silice | 6% |
| — méthylnaphtalène sulfonate de sodium (dispersant) | 3% |
| — polyéthoxyéther d'alcool gras connu sous la marque de commerce REMCOPAL LO2B (agent adhésif non ionique) | 1% |

Les formulations contenant les mélanges des deux matières actives dans le rapport pondéral 6/10 ou 12/10 sont obtenues en mélangeant les quantités appropriées des deux formulations précédentes.

Les formulations ci-dessus sont diluées dans l'eau avant emploi et les suspensions ainsi obtenues sont pulvérisées en plein champ, à raison de 1000 l/ha, sur des cultures de blé d'hiver (variété lutin) au stade tallage, infestées des mauvaises herbes suivantes:

- vulpin (Alopecurus myosuroïdes)
- agrostide (Apera spica venti)
- renouée des oiseaux (Stellaria media)
- matricaire (Matricaria chamomilla)
- pensée (Viola tricolor)
- coquelicot (Papaver rhoeas)
- ravenelle (Raphanus raphanistrum)
- ray grass (Lolium sp)
- véronique (Veronica sp)

Les dilutions sont calculées de façon à apporter les doses de matière active indiquées dans le tableau ci-après.

60 jours après l'application des produits, on dénombre les mauvaises herbes d'une part dans les parcelles traitées et d'autre part dans les parcelles témoins non traitées. On en déduit l'efficacité herbicide des produits vis-à-vis des plantes indésirables. Cette efficacité herbicide est exprimée par le pourcentage de destruction des plantes indésirables. La note 100 correspond donc à une destruction totale des plantes indésirables et la note 0 à une destruction nulle (c'est-à-dire que l'état des plantes indésirables dans les parcelles traitées est le même que celui dans les parcelles témoins).

Les résultats obtenus sont rassemblés dans le tableau suivant:

| Matière active | Dose de matière active appliquée (g/ha) | Efficacité herbicide vis-à-vis des plantes indésirables Observée | Calculée |
|---|---|---|---|
| Mélange M | 600 | 40 | |
| idem | 1200 | 80 | |
| Diclofop méthyl | 1000 | 60 | |
| Mélange M+diclofop méthyl | 600+1000 | 90 | 76 |
| idem | 1200+1000 | 100 | 92 |

Dans le tableau ci-dessus figurent également, dans la colonne efficacité herbicide calculée, les valeurs auxquelles conduiraient pour les associations mélange M 600 g/ha (ou 1200 g/ha)+diclofop méthyl 1000 g/ha les résultats obtenus avec le mélange M employé seul à la dose de 600 g/ha (ou 1200 g/ha) et le diclofop méthyl employé seul à la dose de 1000 g/ha. Les valeurs calculées sont obtenues à l'aide de la formule:

$$P_{XY} = P_X + P_Y - \frac{P_X \cdot P_Y}{100}$$

dans laquelle $P_{XY}$ est le pourcentage de plantes indésirables que l'on peut s'attendre à voir détruit par m g/ha d'un herbicide X+n g/ha d'un herbicide Y, $P_X$ est le pourcentage de plantes indésirables détruit par m g/ha de l'herbicide X et $P_Y$ le pourcentage de plantes indésirables détruit par n g/ha de l'herbicide Y.

La comparaison des valeurs calculées et des valeurs observées fait apparaître, pour les associations mélange M+diclofop méthyl, un effet de synergie net.

## Exemple II

### Traitement herbicide du blé (application de post-levée)

Les matières actives employées sont les mêmes qu'à l'exemple I et sont formulées de la même façon.

Les formulations sont diluées dans l'eau avant emploi et les suspensions obtenues sont pulvérisées en plein champ, à raison de 1000 l/ha, sur des cultures de blé d'hiver (variété lutin) au stade tallage, infestées de vulpin (Alopecurus myosuroïdes). Les dilutions sont calculées de façon à apporter les doses de matière active indiquées dans le tableau ci-après.

Les résultats, évalués selon la méthode exposée à l'exemple I, sont rassemblés dans le tableau suivant:

| Matière active | Dose de matière active appliquée (g/ha) | Efficacité herbicide vis-à-vis du vulpin Observée | Calculée |
|---|---|---|---|
| Mélange M | 600 | 56 | |
| Diclofop méthyl | 1000 | 64 | |
| Mélange M+diclofop méthyl | 600+1000 | 100 | 84 |

La comparaison des valeurs calculée et observée fait apparaître, pour l'association mélange M+diclofop méthyl, un effet de synergie net.

**Revendications**

1. Compositions herbicides caractérisées en ce qu'elles contiennent simultanément, comme matières actives, de la diamino-2,4 chloro-6 méthylthio-5 pyrimidine ou un mélange des deux composés isomères diamino-2,4 chloro-6 méthylthio-5 pyrimidine et diamino-4,6 chloro-2 méthylthio-5 pyrimidine dans lequel le premier de ces composés est prépondérant, et du diclofop méthyl, (ester méthylique de l'acide $\alpha$[(dichloro 2',4'-phénoxy)-4 phénoxy] propionique) le rapport en poids

$$\frac{\text{diamino-2,4 chloro-6 méthylthio-5 pyrimidine}}{\text{diclofop méthyl}}$$

ou

$$\frac{\text{mélange des deux composés isomères}}{\text{diclofop méthyl}}$$

dans les compositions étant de $1/5$ à 5.

2. Compositions herbicides selon la revendication 1, caractérisées en ce que le rapport en poids

$$\frac{\text{diamino-2,4 chloro-6 méthylthio-5 pyrimidine}}{\text{diclofop méthyl}}$$

ou

$$\frac{\text{mélange des deux composés isomères}}{\text{diclofop méthyl}}$$

est de $1/2$ à 2.

3. Procédé de traitement herbicide des cultures de céréales, caractérisé en ce qu'on applique sur celles-ci une composition telle que définie dans chacune des revendications 1 et 2, la dose totale de matière active apportée allant de 600 à 3500 g/ha.

**Patentansprüche**

1. Herbizide Mittel, dadurch gekennzeichnet, daß sie als Wirkstoffe nebeneinander 2,4-Diamino-6-chlor-5-methylthio-pyrimidin oder eine Mischung der beiden isomeren Verbindungen 2,4-Diamino-6-chlor-5-methylthio-pyrimidin und 4,6-Diamino-2-chlor-5-methylthio-pyrimidin, in der die erstere dieser Verbindungen überwiegt, und Diclofop-methyl in einem Gewichtsverhältnis von

$$\frac{\text{2,4-Diamino-6-chlor-5-methylthio-pyrimidin}}{\text{Diclofop-methyl}}$$

oder

$$\frac{\text{Mischung aus den beiden isomeren Verbindungen}}{\text{Diclofop-methyl}}$$

von $1/5$ bis 5 enthalten.

2. Mittel nach Anspruch 1, dadurch gekennzeichnet, daß das Gewichtsverhältnis

$$\frac{\text{2,4-Diamino-6-chlor-5-methylthio-pyrimidin}}{\text{Diclofop-methyl}}$$

oder

$$\frac{\text{Mischung der beiden isomeren Verbindungen}}{\text{Diclofop-methyl}}$$

$1/2$ bis 2 beträgt.

3. Verfahren zur Herbizidbehandlung von Getreidekulturen, dadurch gekennzeichnet, daß man auf sie ein Mittel nach einem der Ansprüche 1 und 2 aufträgt, wobei die Gesamtdosis der aufgebrachten Wirkstoffe 600 bis 3500 g/ha beträgt.

**Claims**

1. Herbicidal compositions characterised in that they simultaneously contain, as active materials, 2.4-diamino-6-chloro-5-methylthiopyrimidine or a mixture of the two isomeric compounds 2.4-diamino-6-chloro-5-methylthiopyrimidine and 4.6-diamino-2-chloro-5-methylthiopyrimidine in which the first of these compounds is preponderant, and methyl diclofop, the weight ratio

$$\frac{\text{2,4-diamino-6-chloro-5-methylthiopyrimidine}}{\text{methyl diclofop}}$$

or

$$\frac{\text{a mixture of the two isomeric compounds}}{\text{methyl diclofop}}$$

in the compositions being $1/5$ to 5.

2. Herbicidal compositions according to claim 1, characterised in that the weight ratio

$$\frac{\text{2,4-diamino-6-chloro-5-methylthiopyrimidine}}{\text{methyl diclofop}}$$

or

$$\frac{\text{a mixture of the two isomeric compounds}}{\text{methyl diclofop}}$$

is $1/2$ to 2.

3. Process for the herbicidal treatment of cereal crops characterised in that a composition such as defined in each of claims 1 and 2 is applied to them, the total dose of active material applied ranging from 600 to 3500 g/ha.